# EUROPEAN PATENT APPLICATION

(11) **EP 4 796 382 A1**
(43) Date of publication of application: **26.08.2026**
(21) Application number: 26153564.5
(22) Date of filing: 22.01.2026
(51) Int. Cl.: B60Q 1/04, F21S 41/20, F21S 41/29, F21S 43/20, F21S 43/27, B60Q 1/00, G01L 1/18

(54) **VEHICLE LIGHTING UNIT, AND MOUNTING METHOD**

(30) Priority: 25.02.2025 IT 202500003705
(71) Applicant: C.R.F. Società Consortile per Azioni, 10043 Orbassano (Torino) (IT)
(72) Inventor: TUNINETTI, Marco, I-10043 Orbassano (Torino) (IT); LAMBERTINI, Vito Guido, I-10049 Giaveno (Torino) (IT); VECA, Antonino Domenico, I-10043 Orbassano (Torino) (IT); COSTA, Renzo, I-10043 Orbassano (Torino) (IT)
(74) Representative: Buzzi, Notaro & Antonielli d'Oulx S.p.A.

(57) **Abstract**

A vehicle lighting unit comprises a support body (2) made of plastic material, and a transparent lens (3) made of plastic material, rigidly connected by welding to the support body (2). The support body (2) is configured to be connected by mechanical connection elements to a vehicle structure. In the support body (2) is integrated at least one piezoresistive sensing track (5), electrically conductive, which extends along at least a portion of an area (6) of contact of the support body (2) with the transparent lens (3). The piezoresistive sensing track (5) is obtained by laser irradiation of the support body (2) which is constituted, at least in a portion thereof, by a polymeric material, or by a polymeric material added with fillers and/or additives, capable of acquiring piezoresistive characteristics following the laser irradiation. In the assembling operation of the lighting unit (1), a variation in the electrical resistance of the piezoresistive sensing track (5) can be monitored in order to obtain information on the degree of deformation, and therefore the degree of stress, imparted to the support body (2) and consequently to the transparent lens (3). This avoids the generation of internal stresses in the transparent lens (3) which can cause, even after a period of time, cracks and fractures of the transparent lens (3).

## Description

### Field of the invention

The present invention relates to vehicle lighting units, of the type comprising a support body made of plastic material and a transparent body made of plastic material (hereinafter and in the appended claims also referred to as "transparent lens") rigidly connected by welding and/or gluing to the support body, wherein the support body is configured to be connected by mechanical connection elements to a vehicle structure.

The invention is applicable to any type of lighting unit, for example to a vehicle rear lighting unit, or to a vehicle front lighting unit, or to a turn signal indicator or to a device of a third brake light or to any other vehicle lighting device having the configuration described above.

### Background of the invention

During the manufacture of lighting units of the type indicated above, said support body made of plastic material is welded, for example ultrasonically, or glued to the transparent lens made of plastic material. The support body can be made, for example, of polycarbonate plus acrylonitrile butadiene styrene (PC + ABS), of acrylonitrile-butadiene-styrene (ABS) or of polypropylene (PP), while the transparent lens can be made, for example, of polymethyl methacrylate (PMMA) or polycarbonate (PC). Following welding or gluing of the two components, internal stresses can be generated in the transparent body which are usually eliminated by heat treatment. However, during the subsequent operation of mounting the lighting unit onto a vehicle structure, performed by applying mechanical connection elements such as screws and/or clips, undesirable deformations can be generated in the support body, for example due to excessive tightening of the screws and/or due to dimensional errors caused by manufacturing tolerances of the two components. The deformations of the support body are transmitted to the transparent lens welded or glued to the support body, so that permanent internal stresses are generated in the transparent lens which can lead to cracks and fractures in the transparent body, even after a period of time (for example during subsequent phases of vehicle production, or even after the vehicle has left the production plant). The internal stresses in the transparent body can also lead to breakage following contact of the transparent body with chemical substances (for example alcohol) capable of interacting with the chemical structure of the plastic material. This leads to the replacement of the component, with a consequent undesirable increase in production or maintenance cost.

There is therefore a need to identify a solution to this problem.

### Object of the invention

It is therefore an object of the present invention to provide a vehicle lighting unit and a related mounting method, which are capable of overcoming the drawback indicated above.

More particularly, it is an object of the invention to provide a vehicle lighting unit and a method for its mounting which are free from the risk of internal stresses being generated in the components of the lighting unit during the operation of mounting onto a vehicle structure, and in particular in the transparent lens, due for example to excessive tightening of fixing screws.

A further object of the invention is to achieve the aforementioned objectives with extremely simple and low-cost means.

### Summary of the invention

In view of achieving one or more of the aforementioned objects, the invention relates to a vehicle lighting unit, of the type indicated at the beginning of the present description, characterized in that the support body has at least one piezoresistive sensing track, which is electrically conductive, and which extends along at least a portion of a contact area of the support body with the transparent body,
said piezoresistive sensing track being obtained by laser irradiation of the support body, which is constituted, at least for a portion thereof, by a polymeric material, or by a polymeric material added with fillers and/or additives, capable of acquiring piezoresistive characteristics following said laser irradiation,
so that, in an assembling operation of the lighting unit onto a vehicle structure, a variation in the electrical resistance of said at least one piezoresistive sensing track can be monitored in order to obtain information on the degree of deformation, and therefore stress, imparted to said support body, and consequently to said transparent lens welded or glued to the support body.

The technology for obtaining piezoresistive tracks by laser irradiation of a substrate is known from document WO 2012/055934 A1. This document illustrates a method for producing piezoresistive tracks in a nonconductive polymeric substrate by laser irradiation. In this known method, the substrate is constituted by a polymeric material, or by a polymeric material added with fillers and/or additives, capable of acquiring piezoresistive characteristics following laser irradiation.

An application of this method for obtaining capacitive or piezoresistive pressure sensors has been the subject of document EP 3 328 167 B1.

Studies and tests conducted by the Applicant have shown that the aforementioned technology can be advantageously used to obtain one or more piezoresistive electrical tracks integrated into the wall itself of a plastic support body of a vehicle lighting unit.

Thanks to the above-mentioned feature, during the assembling operation of the lighting unit onto the vehicle structure, the degree of stress imparted to the plastic support body (and consequently to the transparent lens of the lighting unit) can be monitored by controlling the electrical resistance of the piezoresistive sensing track.

Preferably, said at least one piezoresistive sensing track extends along at least a portion of a peripheral path defining said contact area of the support body with the transparent lens.

In an example/arye embodiment, holes for the engagement of a plurality of fixing screws are formed in the support body, for connecting the lighting unit to a vehicle structure, and said at least one piezoresistive sensing track extends along at least a portion of a peripheral path defining said contact area of the support body with the transparent lens, and also around the perimeter of each of said holes for the engagement of the fixing screws, so that in an assembling operation of the lighting unit onto a vehicle structure, during a tightening of said fixing screws, the electrical resistance of said at least one piezoresistive sensing track can be monitored in order to obtain information on the degree of stress imparted to said support body and consequently to said transparent body following the tightening of the fixing screws.

According to a further preferred feature, said at least one piezoresistive sensing track extends along portions of said peripheral path according to a zig-zag trajectory, including track sections which are oriented in different ways, so that said piezoresistive sensing track undergoes variations in its electrical resistance due to deformations of said support body according to any of several deformation directions.

In an example, the portions of said at least one piezoresistive sensing track that extend around two of said holes are configured to come into contact with respective heads of said fixing screws during said operation of tightening the fixing screws, so that the screws can act as terminal contacts for connection to said electrical resistance measuring device. However, it is also possible to use ad-hoc clamps, or any other type of electrical connector element to connect the measuring device to the piezoresistive track.

The invention is also directed to the mounting method implemented in the manner described above.

Preferably, an initial calibration operation is also provided, by which a threshold value of the electrical resistance across the piezoresistive sensing track is identified, indicative of a maximum allowable value of the degree of deformation of the monitored components. In this way, the operator performing, for example, a screw tightening can interrupt the operation upon reaching said threshold value, or loosen the screws if the threshold value is exceeded.

In the case where the screw tightening operation is performed with an electric screwdriver, it is also possible to provide electronic control of the screwdriver based on the feedback signal generated by a sensor of the electrical resistance of the piezoresistive track.

### Brief description of the drawings

Further features and advantages of the invention will become apparent from the following description with reference to the accompanying drawings, provided by way of non-limiting example only, in which:

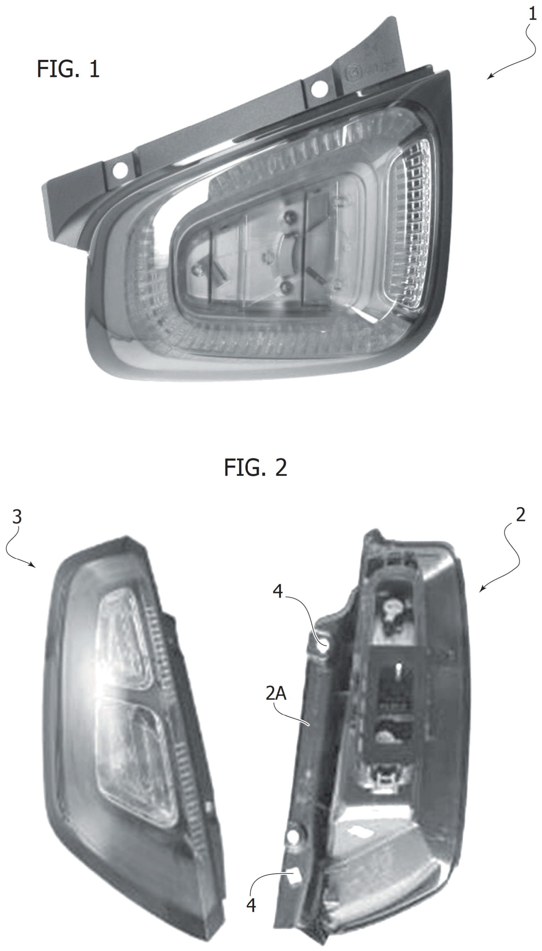

Figure 1 is a perspective view of a vehicle lighting unit, in particular a vehicle rear lighting unit,
Figure 2 is an exploded perspective view of the two main components of the lighting unit of Figure 1, namely the support body and the transparent lens of the lighting unit, and
Figure 3 is a further perspective view of the two components, which schematically shows a piezoresistive sensing track integrated into the wall of the support body, and an electrical resistance measuring device, which is connected to the piezoresistive sensing track during the mounting operations of the lighting unit.

### Detailed description of the invention

In the drawings, reference numeral 1 indicates a vehicle lighting unit, specifically a vehicle rear unit, comprising a support body 2 and a transparent body 3 ("transparent lens"), connected by welding (for example, ultrasonic welding) or gluing to the support body 2. The drawings do not show the internal components of the lighting unit, and in particular do not show the light sources arranged inside the lighting unit. These elements are not illustrated as they can be made in any known manner and also because their omission from the drawings makes the latter more readily and easily understandable. The same applies to the characteristics of the prismatic surfaces associated with the transparent body, which can be made in any known manner.

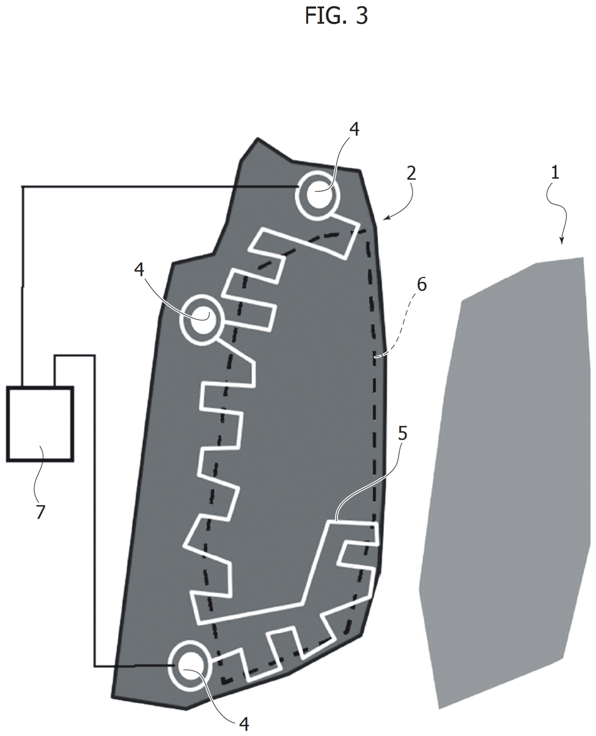

The support body 2 has a flange 2A, having holes 4 (see also Figure 3) for the engagement of fixing screws (not shown), used to rigidly connect the lighting unit 1 to a vehicle structure (not shown). It is understood that the invention applies to lighting units for which connection to the vehicle structure is provided by mechanical elements of any type, including for example fasteners or clips or elastic engagement parts in general.

According to conventional technique, the support body 2 is made of plastic material, for example PC+ABS, ABS or PP, while the transparent body 3, also made of plastic material, is, for example, made of PMMA or PC.

In the lighting unit according to the invention, the support body 2 is prepared, before being joined to the transparent lens 3, with a piezoresistive sensing track 5, electrically conductive, which extends along at least a part of the contact area of the support body 2 with the transparent body 3 (in Figure 3, the dashed line 6 indicates the perimeter along which the two components are in contact with each other).

As visible in Figure 3, in this example the piezoresistive electrical track 5 also extends around the perimeter of each of the holes 4 for the engagement of the fixing screws.

According to the invention, the support body 2, at least for a portion thereof, is constituted by a polymeric material, or by a polymeric material added with fillers and/or additives, capable of acquiring piezoresistive characteristics following laser irradiation. As already indicated, the aforementioned technology is described and illustrated in document WO 2012/055934 A1. For this reason, in the present description, details relating to the usable materials and the laser irradiation process that allows obtaining the piezoresistive sensing track are not further described.

With reference to Figure 3, in the preferred example the piezoresistive track 5 extends, between each hole 4 and the other, following a substantially zig-zag path, with track sections differently oriented so as to undergo a variation in electrical resistance due to deformations of the wall of the support body 2 in any of several deformation directions.

As is evident, the advantage of the technology used in the lighting unit according to the invention lies in the fact that the piezoresistive track 5 is constituted by a portion of the same wall of the support body 2, without the need to provide any additional element superimposed on the wall of the support body.

Thanks to the aforementioned characteristics, during the assembling operation of the lighting unit 1 onto the vehicle structure, it is possible to provide an electrical resistance measuring device 7 (Figure 3), for example an ohmmeter of any known type, to monitor the electrical resistance across the piezoresistive track 5. Due to its piezoresistive properties, the electrical resistance of the track 5 varies as a result of the deformations, and the consequent stresses, imparted to the support body 2 (and consequently to the transparent lens 3 which is welded or glued to the support body 2) during the operation of assembling the lighting unit to the vehicle structure.

During vehicle production, the operation of assembling the lighting unit 1 onto the vehicle structure is performed, in the illustrated example, by applying and tightening fixing screws that engage the holes 4 of the support body 2. This operation is performed after connecting the ends of the piezoresistive track 5 to the electrical resistance measuring device 7. For this purpose, the portions of the piezoresistive track 5 that surround two of the holes 4 can be configured to come into contact with the heads of the respective screws, so that these screws can act as electrical connection clamps with the measuring device 7.

A calibration phase can preferably be provided in which a threshold value of the electrical resistance measured by device 7 is determined, corresponding to a maximum allowable level of deformations imparted to the support body 2 (in this example following the tightening of the fixing screws. The operator can then control the assembling operation by interrupting it upon reaching said threshold value.

As already indicated, automatic control of a screw tightening operation can also be provided, performed by means of an electric screwdriver which is controlled based on a feedback signal generated by device 7, which measures the electrical resistance of the piezoresistive track 5.

As is evident from the foregoing description, the invention therefore allows the operation of assembling the lighting unit onto the vehicle structure to be carried out without triggering the risk of cracks or breakage of the transparent body during the assembling operation or during any subsequent phase of vehicle production, or even after the vehicle has left the production plant. This result is achieved without requiring the use of additional components in the lighting unit, since the piezoresistive track is constituted by the same material constituting the support body of the lighting unit. The technology used for this purpose is compatible with conventional production systems and with the materials used, including recycled materials.

Naturally, the principle of the invention remaining the same, the details of construction and forms of embodiment may vary widely with respect to those described and illustrated purely by way of non-limiting example, without thereby departing from the scope of the present invention as defined in the appended claims.

## Claims

1. Vehicle lighting unit, comprising a support body (2) made of plastic material, and a transparent lens (3) made of plastic material, which is rigidly connected by welding or gluing to the support body (2), wherein the support body (2) is configured to be connected to a vehicle structure by means of mechanical connection elements,
**characterized in that** the support body (2) has at least one piezoresistive sensing track (5), which is electrically conductive, extending along at least a portion of an area (6) of contact of the support body (2) with the transparent lens (3),
said piezoresistive sensing track (5) being obtained by laser irradiation of the support body (2) which is made, at least for a portion thereof, by a polymeric material or by a polymeric material added with fillers and/or additives, capable of acquiring piezoresistive characteristics following said laser irradiation,
so that, during an assembling operation of the lighting unit (1) onto a vehicle structure, a variation in the electrical resistance of said at least one piezoresistive sensing track (5) can be monitored in order to obtain information on the degree of deformation, and therefore the degree of stress, imparted to said support body (2), and consequently to said transparent lens (3) welded or glued to the support body (2).

2. Lighting unit according to claim 1, **characterized in that** said at least one piezoresistive sensing track (5) extends along at least a portion of a peripheral path (6) defining said contact area of the support body (2) with said transparent body (3).

3. Lighting unit according to claim 1, **characterized in that** holes (4) for the engagement of a plurality of fixing screws are formed in the support body (2), for connecting the lighting unit (1) to a vehicle structure, and **in that** said at least one piezoresistive sensing track (5) extends along at least a portion of a peripheral path (6) defining said contact area of the support body (2) with the transparent lens (3), and also around the perimeter of each of said holes (4) for the engagement of the fixing screws,
so that in an assembling operation of the lighting unit (1) onto a vehicle structure, during a tightening of said fixing screws, the electrical resistance of said at least one piezoresistive sensing track (5) can be monitored in order to obtain information on the degree of stress imparted to said support body (2) and consequently to said transparent lens (3) following the tightening of the fixing screws.

4. Lighting unit according to claim 2, **characterized in that** said at least one piezoresistive sensing track (5) extends along portions of said peripheral path (6) according to a zig-zag trajectory, including track sections which are differently oriented, so that said piezoresistive sensing track undergoes variations in its electrical resistance due to deformations of said support body (2) according to any of several deformation directions.

5. Lighting unit according to claim 3, **characterized in that** the portions of said at least one piezoresistive sensing track (5) that extend around two of said holes (4) are configured to come into contact with respective heads of said fixing screws during said operation of tightening the fixing screws, so that the screws can act as terminal contacts for connection to said electrical resistance measuring device (7).

6. Method for mounting a lighting unit (1) onto a vehicle structure, wherein the lighting unit (1) comprises a support body (2) made of plastic material and a transparent lens (3) made of plastic material, rigidly connected by welding or gluing to the support body (2), wherein the support body (2) is configured to be connected by mechanical connection elements to a vehicle structure,
said method being **characterized in that**:
- the support body (2) is provided, before being connected with the transparent body (3), with at least one piezoresistive sensing track (5), which is electrically conductive, and which extends along at least part of a contact area (6) of the support body (2) with the transparent body (3),
- said piezoresistive sensing track (5) is obtained by laser irradiation of a portion of the support body (2) which is constituted by a polymeric material, or by a polymeric material added with fillers and/or additives, capable of acquiring piezoresistive characteristics following laser irradiation,
- the operation of connecting the support body (2) to the vehicle structure by said mechanical connection elements is performed by monitoring a variation in the electrical resistance of said at least one piezoresistive sensing track (5), so as to obtain information on the degree of deformation, and therefore the degree of stress, imparted to said support body (2), and consequently to said transparent lens (3), during the operation of connection by said mechanical connection elements, thereby avoiding the generation of internal stresses in the transparent body (3).

7. Method according to claim 6, **characterized in that** holes (4) for the engagement of a plurality of fixing screws are formed in the support body (2) for connecting the lighting unit (1) to a vehicle structure, and **in that**, in the operation of connecting the lighting unit (1) onto a vehicle structure, during a tightening of said fixing screws, the electrical resistance of said at least one piezoresistive sensing track (5) is monitored in order to obtain information on the degree of deformation, and therefore stress, imparted to said support body (2) and consequently to said lens transparent (3) following the tightening of the fixing screws.

8. Method according to claim 7, **characterized in that** it comprises an initial calibration operation, in which a value of the electrical resistance of said piezoresistive electrical track (5) corresponding to a maximum allowable threshold of the tightening of the fixing screws is determined.

9. Method according to claim 7, **characterized in that** the operation of tightening the fixing screws is performed with an electric screwdriver, with an electronic control of the screwdriver based on the feedback signal generated by a sensor of the electrical resistance of the piezoresistive track (5).
